# EUROPEAN PATENT SPECIFICATION

(11) **EP 1 244 877 B1**
(45) Date of publication and mention of the grant of the patent: **04.08.2004**
(21) Application number: 00979801.8
(22) Date of filing: 05.12.2000
(51) Int. Cl.: F16B 25/10, F16B 23/00, F16B 35/04, F16B 39/30, F16B 31/00

(54) **ANCHORING ELEMENT**
VERANKERUNGSELEMENT
ANCRAGE

(30) Priority: 09.12.1999 GB 9929005
(43) Date of publication of application: 02.10.2002
(73) Proprietor: Taylor, Ronald, Newcastle-under-Lyme, Staffordshire ST5 7AS (GB)
(72) Inventor: Taylor, Ronald, Newcastle-under-Lyme, Staffordshire ST5 7AS (GB)
(74) Representative: Womsley, Nicholas
(86) International application number: PCT/GB2000/004627
(87) International publication number: WO 2001/042665

(56) References cited:
- EP-A- 0 370 674
- PATENT ABSTRACTS OF JAPAN vol. 018, no. 196 (M-1589), 6 April 1994 (1994-04-06) & JP 06 002706 A (KOKUBU:KK), 11 January 1994 (1994-01-11)

## Description

The present invention relates to anchorages, and particularly but not exclusively to anchorages for securing an object to a fixture such as a board or panel.

EP-A-0370674 discloses a drill screw having first and second shanks which provide a break zone so that the screw can be shortened.

According to the present invention there is provided an anchorage for securing an object to a fixture, the anchorage comprising a body portion, thread means extending around the body portion and a region of weakness provided partway along the body portion to enable selective shortening of the length of the anchorage, characterised in that the thread means is weakened over the said region of weakness to facilitate said selective shortening.

Preferably the weakness is sufficient to enable selective breakage of the anchorage but to generally resist breakage during threaded location of the anchorage in a fixture. Preferably the anchorage is weakened for selective breakage out of location in the fixture, preferably after the anchorage has been used to bore a hole in a fixture in which the shortened anchorage is to be threadedly located.

The region of weakness is desirably provided a distance from one end of the body portion substantially equal to the thickness of fixture in which the anchorage is intended to be located, which distance may be generally mid-way along the length of the body portion. The weakness may comprise a groove or other such formation preferably extending around the body portion. The said one end is preferably the end engaged to drive threaded location of the anchorage into a fixture. A head portion may be provided on said one end which head portion is preferably of greater diameter than the body portion and may further comprise means or be shaped to receive a tool to facilitate threaded located of the anchorage.

Preferably one or more securing formations extend from the body portion generally between said thread means to bite into a fixture in which the anchorage is threadedly located whereby to secure location of the anchorage into the fixture.

The securing formation(s) may comprise one or more secondary threads extending around the body portion. Alternatively, or in addition, the securing formations may comprise a plurality of projections in spaced location around the body portion. The formations may be shaped to facilitate biting and securing thereof in a fixture, for example the formations may taper generally toward a point in the direction of threaded location of the anchorage in a fixture whereby to facilitate such location and to resist removal generally by unthreading the anchorage from the fixture.

Preferably the formation(s) extend from generally one end of the body portion to only part way, and desirably approximately or less than mid-way, along the length of the body portion. The formation(s) preferably extend from the body portion to a lower height than the thread means, and may be equispaced between the thread means. The formation(s) are preferably narrower in cross-section than the thread means.

Preferably the body portion is so shaped to ensure the resistance to insertion of the anchorage into a fixture is substantially constant or increases during insertion whereby the forces retaining the anchorage are substantially constant or increase during insertion. The body portion may be tapered from the one end, desirably along its length to the other end. As an alternative the diameter of the body portion may increase from a point partway along the body portion to the said one end and desirably over the region between the region of weakness and the said one end, and the remaining section of the body portion between the region of weakness and the other end of the body portion being of generally constant diameter.

The thread means may extend from the said region between the weakness and the said one end into the said section of the body portion. The thread means is preferably suitably weakened at the point it passes over the said region of weakness. Alternatively the thread means may comprise two discrete portions, the first in said region the other in said section.

Preferably the thread means extend from at or near to the said one end to facilitate secure location in a relatively thin fixture.

Preferably a cutting head is provided on the said other end of the portion. Preferably the cutting diameter of the cutting head is substantially the same as or slightly larger than the largest diameter of the body portion.

Preferably a passage is provided in the body portion extending from the said one end to securely receive means to attach an object or an object to be secured, to a fixture. The passage preferably extends substantially down the length of the body portion from an opening at the said one end, but preferably comprises a blind end at or near the said other end. The passage may be arranged to receive threaded attachment means such as screws or similar devices, with differing thread external diameter. Preferably the passage is arranged to receive threads varying in size as a consequence of manufacturing tolerances of the means. Preferably the passage is arranged to receive various sizes of thread without any significant increase in torque forces being transferred to the body. The passage may comprise a plurality of rib formations extending down the passage. The rib formations preferably extend down the length of the passage in desirably generally equispaced relationship around the internal circumference of the passage. The rib formations desirably extend into the passage to a substantially equal distance, and are desirably all of similar conformation.

Preferred embodiments of the present invention will now be described by way of example only, with reference to the accompanying drawings, in which:-
Fig. 1 is a side view of an anchorage according to a first embodiment of the present invention;
Fig. 2 is a corresponding view of an anchorage according to a second embodiment of the present invention;
Fig. 3 is a side view of an anchorage according to a third embodiment of the present invention; and
Fig. 4 is a view of the head of the anchorage of Fig. 1 in the direction of arrows IV.

Referring to the drawings, there is provided an anchorage 10 for securing an object (not shown) to a fixture (not shown), the anchorage 10 comprising a body portion 12, thread means 16 extending around the body portion 12 and one or more securing formations 14 extending from the body portion 12 generally between the said thread means 16 to bite into a fixture in which the anchorage 10 is secured whereby to secure location of the anchorage 10 to the fixture. The anchorage 10 is particularly suitable for location in fixture of friable material, such as plaster board.

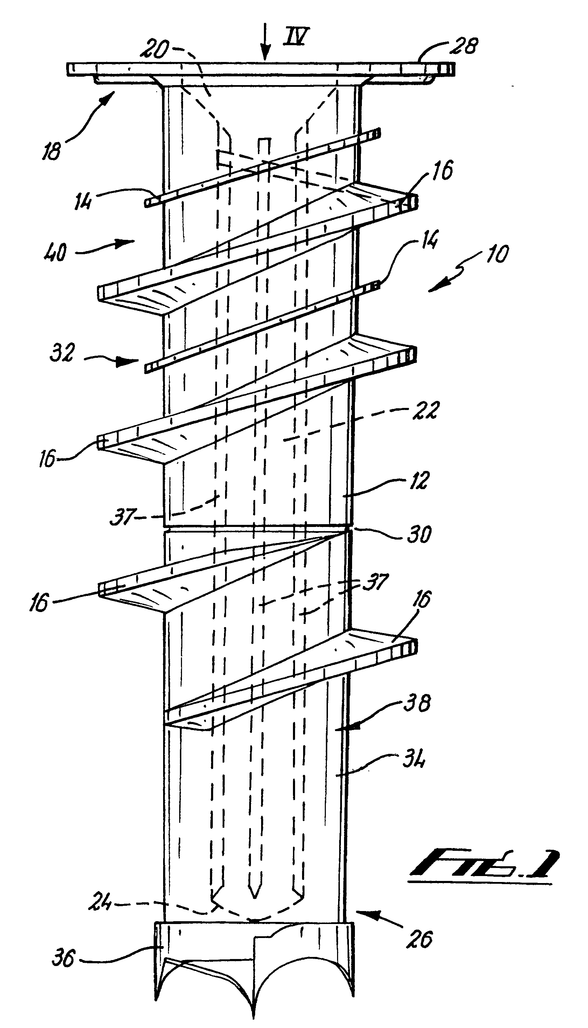

In more detail, referring particularly to Fig. 1, the body portion 12 is generally elongate and cylindrical and comprises at one end 18 thereof an opening 20 to a passage 22 extending generally centrally down the length of the passage to terminate at a blind end 24 short of the other end 26 of the body portion 12. The body portion may be moulded from a suitable metal or other material, such as plastics material including reinforced or other copolymeric material. A generally flat annular head 28 is provided at the said one end 18 which head 28 may comprise formations 29 to receive or engage a tool, such as a manual screw driver or similar power tool, for manipulation of the anchorage 10 as will be described.

The thread means 16 comprises a helical thread extending around the body portion from a position generally at or near the said one end 18 to a position partway along the length of the body portion 12.

The securing formations 14 comprise a secondary thread which winds down the body portion 12 generally between the thread means 16. The secondary thread formations 14 are smaller than the thread means 16 both in the distance they extend from the body portion 12 and also in their width. The securing formations 14 are integrally moulded in the body portion 12.

In Fig. 1, the securing secondary thread formations 14 comprise generally two twists, but it will be appreciated that any appropriate number of twists can be provided, and more than one thread may extend between the thread means 16.

A region of weakness 30 in the form of a groove is provided around the body portion 12 substantially partway along its length. The anchorage of Fig. 1 shows the groove 30 located approximately mid-way along the length of the body portion 12, but it can be at any suitable location which provides for the anchorage 10 to be selectively shortened to a predetermined length which length could usefully be substantially equal to the thickness of a fixture, if said fixture is a panel or board-like fixture, in which the anchorage 10 is intended to be located.

The groove 30 provides a location at which the anchorage 10 can be selectively broken to allow for selective shortening of the length of the anchorage 10, for reasons as will be explained. It will be appreciated that the region of weakness can be of any suitable form. For example it could comprise one or more weakness spots or lines or nicks formed in the body portion 12.

It will be appreciated that as illustrated in Fig. 1, because the thread means 16 extends along the body portion 12 and generally over the region of weakness 30, the thread means 16 is either broken, as shown in Fig. 1, or otherwise weakened to allow for selective breakage of the anchorage 10 at said region 30.

Providing thread means generally along the length of the body portion 12 enables the anchorage 10 to be used to secure two boards together or provide additional securing if the anchorage 10 is not desired or required to be shortened in location.

The securing formations 14 are located in the region 32 of the body portion between the groove 30 and the said one end 18, and do not extend into the section 34 of the body portion 12 between the groove 30 and said other end 26. This facilitates selective withdrawal of the section 34 from a fixture as will be explained.

At the said end 26 is provided a cutting head 36 generally in the form of a trepan cutting head which provides for self drilling for location of the anchorage 10 into a fixture as will be explained. As an alternative the head may comprise a twist drill. In both cases it is preferable that the cutting head 36 provides for self-centring at the desired location for boring. The diameter of bore cut by the cutting head is slightly greater than the outside diameter of the part 38, although is an alternative embodiment the diameter could be substantially equal.

The passage 22 comprises four rib formations 37 equispaced around the internal circumference and extending generally parallel down the length of the passage 22. The rib formations 37 enable the anchorage 10 to securely accommodate attachment means such as screws which vary according to manufacturing tolerances. The formations 37 may also receive machine screws or similar which will self-tap a thread in the formations 37. The rib formations 37 are integrally formed in the body portion, and are arranged to mitigate the transfer of torque forces to the body portion as a screw is threaded into the anchorage 10.

In use, the anchorage 10 is used to secure an object to a fixture such as a board or panel member, for instance plasterboard. The object may be attached directly to the anchorage 10 or may be attached by attachment means such as a screw. The passage 22 in the anchorage 10 is designed to receive a threaded object for attachment, and the ribs 37 enable the anchorage 10 to securely receive threads varying in size due to manufacturing tolerances. It will be appreciated that any suitable attachment means can be accommodated by the anchorage 10 in accordance with the present invention.

Once the location for securing the anchorage 10 to the fixture has been chosen, the anchorage 10 is offered up to that location such that the cutting head 36 contacts the surface of the fixture. A suitable tool, such as a screwdriver, is engaged in the said one end 18 and the anchorage 10 turned, usually in a clockwise direction, such that the cutting head 36 begins to cut into the fixture. The cutting head, which is shown in the form of a trepan cutter is self-centring to provide for accurate location. The thread may alternatively comprise a twist drill. As rotation continues and the anchorage 10 driven into the fixture, the thread means 16 begins to engage and cut into the fixture. Continued screwing of the anchorage 10 drives the anchorage 10 into the fixture. As the securing formations come into contact with the fixture, they bite into the fixture and help secure location of the anchorage 10 within the fixture. The formations are designed so that they resist removal of the anchorage from the fixture. The anchorage 10 is threaded until the annular head 28 abuts the outer surface of the fixture. An object can then be attached to the fixture via the anchorage.

If the fixture is sufficiently deep or otherwise able to accommodate the whole of the length of the anchorage 10, or the end 26 of the anchorage 10 protrudes from the other side of the fixture, and this is acceptable in the circumstances of application of the anchorage 10, the anchorage 10 can be located in secure location as described above, to receive a screw or other fixing means or objects so shaped to be securely locatable in the passage 22.

However, often it is undesirable or indeed not possible for the anchorage 10 to be threaded completely into the fixture, especially leaving the end 26 extending from the rear side of the fixture. For example, if the anchorage 10 is used in plasterboard located against or near a brick wall in which the cutting head 36 cannot or is not desired to locate in, then the anchorage 10 can be threaded into the fixture up to the point just before the securing formations engage the fixture, in this case the region of weakness 30. At this point the anchorage 10 is turned in the opposite direction and withdrawn from the fixture. The absence of securing formations in the part 38 enables the anchorage 10 to be relatively easily withdrawn, the length of said part 38 preferably being substantially equal to or greater than the thickness of the fixture. The anchorage 10 can then be broken for example using tools such as pliers or any other suitable means, about the line of weakness 30 to shorten the length thereof. The part 38 of the anchorage 10 bearing the cutting head 36 can be discarded, and the part 40 introduced to and threadably located in the bore previously produced, for securing of the anchorage 10 in the board fixture.

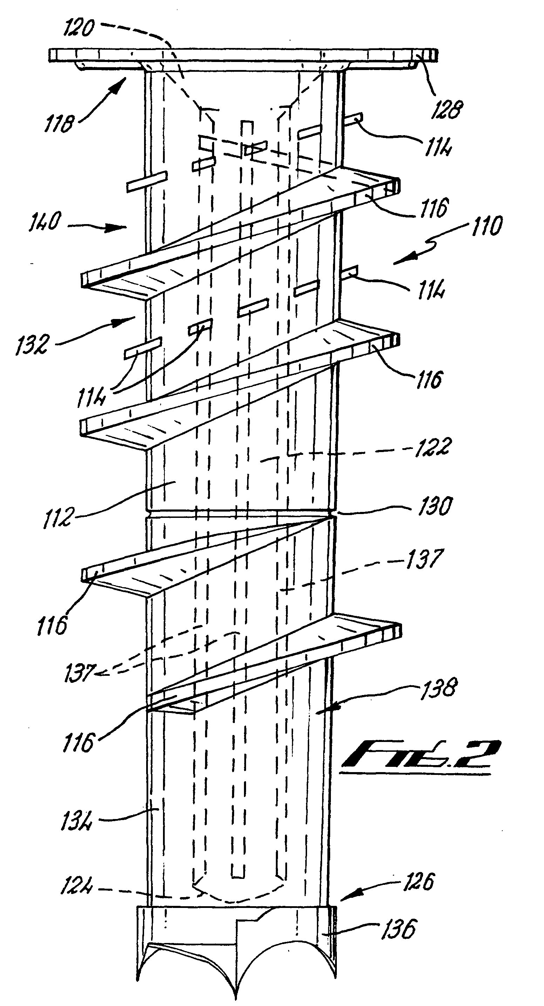

Fig. 2 shows an alternative embodiment of an anchorage 110 comprising many similar features to the anchorage 10. These features are referenced with the same numerals, prefixed "1".

In this embodiment the securing formations 14 comprise projections which extend from the body portion 12. Fig. 2 shows the projections winding down the body portion 12 following a generally threadlike path, again between the thread means 16. This configuration facilitates entry of the anchorage 10 into a fixture, but it will be appreciated that the formations do not necessarily have to follow a generally helical configuration.

The formations 14 are also shaped to facilitate location of the anchorage 10 in a fixture but resist removal. They are shaped to be generally tapered toward a point in the direction of rotation of the anchorage 10 during insertion which as mentioned above facilitates insertion and when threaded into friable material such as plaster board, help to mitigate damage to the material whereby to help improve security of location.

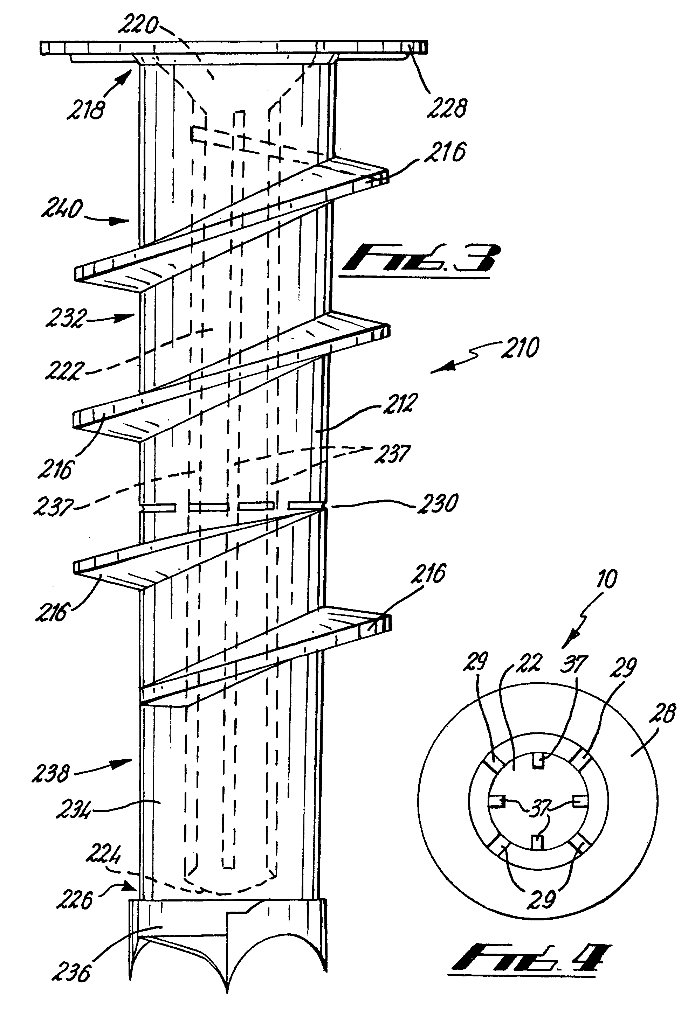

Fig. 3 shows an anchorage 210 according to a further embodiment of the present invention in which the region 232 tapers along its length from the groove 230 to the annular head 28 such that at its widest portion adjacent the annular head 28 the diameter of the body portion 212 is substantially the same as the cutting diameter of the cutting head 236. The section 238 between the region of weakness in the form of spaced nicks or slots around the body portion 230 and the end 226 is also tapered. Section 238 could also be of substantially constant diameter. This tapering helps to facilitate location of the anchorage 10 and helps to secure said location, by ensuring that the resistance to insertion of the anchorage 210 into a fixture is substantially constant or increases during insertion whereby the forces retaining the anchorage 10 are substantially constant or increase during insertion, because the bore created by the cutting head is of smaller and constant cross-sectional diameter than all but the thinnest area of the part 240.

The embodiment in Fig. 3 does not comprise any securing formations, but otherwise functions the same as the anchorage described above.

Various modifications may be made without departing from the scope of the present invention. For example any feature of combination of features described in the three embodiments may be provided in any one of said embodiments. The anchorages 10, 110, 210 may be adapted to receive any type of object or attachment means for attachment of objects thereto and hence to a fixture. For example the anchorage 10, 110, 210 may not comprise a passage 22, 122, 222 but be of suitable material to receive a threaded member such as a screw threaded directly therein.

## Claims

1. An anchorage (10) for securing an object to a fixture, the anchorage (10) comprising a body portion (12), thread means (16) extending around the body portion (12) and a region of weakness (30) provided partway along the body portion (12) to enable selective shortening of the length of the anchorage (10), **characterised in that** the thread means (16) is weakened over the said region of weakness (30) to facilitate said selective shortening.

2. An anchorage as claimed in claim 1, **characterised in that** the weakness is sufficient to enable selective breakage of the anchorage (10) but to generally, resist breakage during threaded location of the anchorage (10) in a fixture.

3. An anchorage as claimed in any preceding claim, **characterised in that** the anchorage (10) is weakened for selective breakage out of location in the fixture, preferably after the anchorage (10) has been used to bore a hole in a fixture in which the shortened anchorage is to be threadedly located.

4. An anchorage as claimed in any preceding claim, **characterised in that** the region of weakness (30) is provided a distance from one end (18) of the body portion (12) substantially equal to the thickness of fixture in which the anchorage (10) is intended to be located.

5. An anchorage as claimed in any preceding claim, **characterised in that** the region of weakness (30) is provided generally mid-way along the length of the body portion (12).

6. An anchorage as claimed in any preceding claim, **characterised in that** the weakness comprises a groove or other such formation extending around the body portion (12).

7. An anchorage as claimed in any of claims 4 to 6, **characterised in that** the said one end (18) is the end engaged to drive threaded location of the anchorage into a fixture.

8. An anchorage as claimed in any of claims 4 to 7, **characterised in that** a head portion (28) provided on said one end (18) which head portion (28) is of greater diameter than the body portion (12).

9. An anchorage as claimed in claim 8, **characterised in that** the head portion (28) comprises means or is shaped to receive a tool to facilitate threaded located of the anchorage (10).

10. An anchorage as claimed in any preceding claim, **characterised in that** one or more securing formations (14) extend from the body portion (12) generally between said thread means (16) to bite into a fixture in which the anchorage (10) is threadedly located whereby to secure location of the anchorage (10) into the fixture.

11. An anchorage as claimed in claim 10, **characterised in that** the securing formation(s) (14) comprise one or more secondary threads extending around the body portion (12).

12. An anchorage as claimed in claim 10 or claim 11, **characterised in that** the securing formations (14) comprise a plurality of projections in spaced location around the body portion (12).

13. An anchorage as claimed in claim 12, **characterised in that** the formations (14) are shaped to facilitate biting and securing thereof in a fixture.

14. An anchorage as claimed in claim 13, **characterised in that** the formations (14) taper generally toward a point in the direction of threaded location of the anchorage (10) in a fixture whereby to. facilitate such location and to resist removal generally by unthreading the anchorage (10) from the fixture.

15. An anchorage as claimed in any of claims 10 to 14, **characterised in that** the formation(s) (14) extend from generally one end (18) of the body portion (12) to only part way, and desirably approximately or less than mid-way, along the length of the body portion (12).

16. An anchorage as claimed in any of claims 10 to 15, **characterised in that** the formation(s) (14) extend from the body portion (12) to a lower height than the thread means (16).

17. An anchorage as claimed in any of claims 10 to 16, **characterised in that** the formation(s) (14) are equispaced between the thread means (16).

18. An anchorage as claimed in any of claims 10 to 17, **characterised in that** the formation(s) (14) are narrower in cross-section than the thread means (16).

19. An anchorage as claimed in any preceding claim, **characterised in that** the body portion (12) is so shaped to ensure the resistance to insertion of the anchorage (10) into a fixture is substantially constant or increases during insertion whereby the forces retaining the anchorage (10) are substantially constant or increase during insertion.

20. An anchorage as claimed in claim 19, **characterised in that** the body portion (12) is tapered from the one end (18) along its length to the other end (26).

21. An anchorage as claimed in claim 19, **characterised in that** the diameter of the body portion (12) increases from a point partway along the body portion (12) to the said one end (18) and desirably over the region between the region of weakness (30) and the said one end (18), and the remaining section of the body portion (12) between the region of weakness (30) and the other end (26) of the body portion (12) being of generally constant diameter.

22. An anchorage as claimed in claim 21, **characterised in that** the thread means (16) extends from the said region between the weakness and the said one end (18) into the said section of the body portion (12).

23. An anchorage as claimed in any preceding claim, **characterised in that** the thread means (16) comprises two discrete portions, one either side of the region of weakness (30).

24. An anchorage as claimed in any of claims 4 to 23, **characterised in that** the thread means (16) extends from at or near to the said one end (18) to facilitate secure location in a relatively thin fixture.

25. An anchorage as claimed in any of claims 20 to 24, **characterised in that** a cutting head (36) is provided on the said other end (26) of the portion (12).

26. An anchorage as claimed in claim 25, **characterised in that** the cutting diameter of the cutting head (36) is substantially the same as or slightly larger than the largest diameter of the body portion (12).

27. An anchorage as claimed in any of claims 4 to 26, **characterised in that** a passage (22) is provided in the body portion (12) extending from the said one end (18) to securely receive means to attach an object or an object to be secured, to a fixture.

28. An anchorage as claimed in claim 27, **characterised in that** the passage (22) extends substantially down the length of the body portion (12) from an opening (20) at the said one end (18).

29. An anchorage as claimed in claim 28, **characterised in that** the passage (22) comprises a blind end (24) at or near the said other end (26).

30. An anchorage as claimed in any of claims 27 to 29, **characterised in that** the passage (22) is arranged to receive threaded attachment means such as screws or similar devices, with differing thread external diameter.

31. An anchorage as claimed in claim 30, **characterised in that** the passage (22) is arranged to receive threads varying in size as a consequence of manufacturing tolerances of the means.

32. An anchorage as claimed in claim 30 or claim 31, **characterised in that** the passage (22) is arranged to receive various sizes of thread without any significant increase in torque forces being transferred to the body.

33. An anchorage as claimed in any of claims 27 to 32, **characterised in that** the passage (22) comprises a plurality of rib formations (37) extending down the passage.

34. An anchorage as claimed in claim 33, **characterised in that** the rib formations (37) extend down the length of the passage (22) in generally equispaced relationship around the internal circumference of the passage (22).

35. An anchorage as claimed in claim 33 or claim 34, **characterised in that** the rib formations (37) extend into the passage (22) to a substantially equal distance.

36. An anchorage as claimed in any of claims 33 to 35, **characterised in that** the rib formations (37) are all of similar conformation.

## Patentansprüche

1. Verankerung (10) zum Befestigen eines Gegenstands an einer Montagevorrichtung, wobei die Verankerung (10) einen Körperabschnitt (12), ein sich um den Körperabschnitt (12) herum erstreckendes Gewindemittel (16) sowie einen entlang einem Teil der Länge des Körperabschnitts (12) vorgesehenen geschwächten Bereich (30) aufweist, um ein selektives Verkürzen der Länge der Verankerung (10) zu ermöglichen, **dadurch gekennzeichnet, dass** das Gewindemittel (16) über dem geschwächten Bereich (30) geschwächt ist, um das selektive Verkürzen zu erleichtern.

2. Verankerung nach Anspruch 1, **dadurch gekennzeichnet, dass** die Schwächung ausreicht, um ein selektives Brechen der Verankerung (10) zu ermöglichen, jedoch einem Bruch während der gewindemäßigen Anordnung der Verankerung (10) in einer Montagevorrichtung im allgemeinen widersteht.

3. Verankerung nach einem der vorhergehenden Ansprüche, **dadurch gekennzeichnet, dass** die Verankerung (10) geschwächt ist für ein selektives Herausbrechen aus dem Ort in der Montagevorrichtung, vorzugsweise nachdem die Verankerung (10) verwendet worden ist, um ein Loch in eine Montagevorrichtung zu bohren, in welcher die verkürzte Verankerung angeordnet werden soll.

4. Verankerung nach einem der vorhergehenden Ansprüche, **dadurch gekennzeichnet, dass** der geschwächte Bereich (30) in einem Abstand von einem Ende (18) des Körperabschnitts (12) vorgesehen ist, der im wesentlichen gleich der Dicke der Montagevorrichtung entspricht, in welcher die Verankerung (10) angeordnet werden soll.

5. Verankerung nach einem der vorhergehenden Ansprüche, **dadurch gekennzeichnet, dass** der geschwächte Bereich (30) im allgemeinen auf halbem Weg entlang der Länge des Körperabschnitts (12) vorgesehen ist.

6. Verankerung nach einem der vorhergehenden Ansprüche, **dadurch gekennzeichnet, dass** die Schwächung eine Rille oder eine andere derartige Formation aufweist, die sich um den Körperabschnitt (12) herum erstreckt.

7. Verankerung nach einem der Ansprüche 4 bis 5, **dadurch gekennzeichnet, dass** das eine Ende (18) das im Eingriff befindliche Ende ist, um den mit einem Gewinde versehenen Ort der Verankerung in eine Montagevorrichtung zu treiben.

8. Verankerung nach einem der Ansprüche 4 bis 7, **dadurch gekennzeichnet, dass** ein Kopfabschnitt (28) an dem einen Ende (18) vorgesehen ist, wobei der Kopfabschnitt (28) einen größeren Durchmesser als der Körperabschnitt (12) hat.

9. Verankerung nach Anspruch 8, **dadurch gekennzeichnet, dass** der Kopfabschnitt (28) ein Mittel oder eine Formgebung zur Aufnahme eines Werkzeugs aufweist, um die gewindemäßige Anbringung der Verankerung (10) zu erleichtern.

10. Verankerung nach einem der vorhergehenden Ansprüche, **dadurch gekennzeichnet, dass** sich eine oder mehrere Formationen (14) von dem Körperabschnitt (12) im allgemeinen zwischen dem Gewindemittel (16) erstrecken, um sich in eine Montagevorrichtung (12) hineinzufressen, in welcher die Verankerung (10) gewindemäßig angeordnet wird, wobei die Anordnung der Verankerung (10) in der Montagevorrichtung befestigt bzw. abgesichert wird.

11. Verankerung nach Anspruch 10, **dadurch gekennzeichnet, dass** die Absicherungsformation(en) (14) ein oder mehrere sekundäre Gewinde aufweist (aufweisen), die sich um den Körperabschnitt (12) herum erstrecken.

12. Verankerung nach Anspruch 10 oder 11, **dadurch gekennzeichnet, dass** die Sicherungsformationen (14) ein Vielzahl von Vorsprüngen aufweisen, die um den Körperabschnitt (12) herum voneinander beabstandet sind.

13. Verankerung nach Anspruch 12, **dadurch gekennzeichnet, dass** die Formationen (14) so geformt sind, dass sie das Hineinfressen und ihre Sicherung in einer Montagevorrichtung erleichtern.

14. Verankerung nach Anspruch 13, **dadurch gekennzeichnet, dass** die Formationen (14) sich im allgemeinen zu einem Punkt in der Richtung der gewindemäßigen Anordnung der Verankerung (10) in einem Montagevorrichtung verjüngen, wodurch eine derartige Anbringung erleichtert wird und ein Widerstand gegen ein Entfernen vorwiegend durch Abschrauben der Verankerung (10) aus der Montagevorrichtung bewirkt wird.

15. Verankerung nach einem der Ansprüche 10 bis 14, **dadurch gekennzeichnet, dass** die Formation(en) (14) sich vorwiegend von dem einen Ende (18) des Körperabschnitts (12) über nur einen Teilabschnitt, und vorzugsweise ungefähr weniger als die Hälfte, entlang der Länge des Körperabschnitts (12) erstreckt (erstrecken).

16. Verankerung nach einem der Ansprüche 10 bis 15, **dadurch gekennzeichnet, dass** die Formation(en) (14) sich von dem Körperabschnitt (12) bis auf eine geringere Höhe als das Gewindemittel (16) erstreckt (erstrecken).

17. Verankerung nach einem der Ansprüche 10 bis 16, **dadurch gekennzeichnet, dass** die Formation(en) (14) zwischen dem Gewindemittel (16) gleichmäßig beabstandet ist (sind).

18. Verankerung nach einem der Ansprüche 10 bis 17, **dadurch gekennzeichnet, dass** die Formation(en) (14) einen geringeren Querschnitt als das Gewindemittel (16) hat (haben).

19. Verankerung nach einem der vorhergehenden Ansprüche, **dadurch gekennzeichnet, dass** der Körperabschnitt (12) eine solche Form hat, die gewährleistet, dass der Widerstand gegenüber dem Einführen der Verankerung (10) in eine Montagevorrichtung im wesentlichen konstant ist oder sich während des Einführens erhöht, wodurch die Kräfte, welche die Verankerung (10) zurückhalten, im wesentlichen konstant sind oder sich während des Einführens erhöhen.

20. Verankerung nach Anspruch 19, **dadurch gekennzeichnet, dass** der Körperabschnitt (12) von dem einen Ende (18) entlang seiner Länge zu dem anderen Ende (26) verjüngt ist.

21. Verankerung nach Anspruch 19, **dadurch gekennzeichnet, dass** der Durchmesser des Körperabschnitts (12) von einem Punkt auf einem Teil des Weges entlang des Körperabschnitts (12) zu dem einen Ende (18) und vorzugsweise über den Bereich zwischen dem geschwächten Bereich (30) und dem einen Ende (18) zunimmt, und wobei der verbleibende Teilbereich des Körperabschnitts (12) zwischen dem geschwächten Bereich (30) und dem anderen Ende (26) des Körperabschnitts (12) einen im wesentlichen konstanten Durchmesser hat.

22. Verankerung nach Anspruch 21, **dadurch gekennzeichnet, dass** sich das Gewindemittel (16) von dem Bereich zwischen der Schwächung und dem einen Ende (18) in den Teilbereich des Körperabschnitts (12) erstreckt.

23. Verankerung nach einem der vorhergehenden Ansprüche, **dadurch gekennzeichnet, dass** das Gewindemittel (16) zwei gesonderte Abschnitte auf jeder Seite des geschwächten Bereichs (30) aufweist.

24. Verankerung nach einem der Ansprüche 4 bis 23, **dadurch gekennzeichnet, dass** das Gewindemittel (16) sich bis zu dem einen Ende (18) oder in dessen Nähe erstreckt, um eine sichere Anbringung in einer relativ dünnen Montagevorrichtung zu erleichtern.

25. Verankerung nach einem der Ansprüche 20 bis 24, **dadurch gekennzeichnet, dass** ein Schneidkopf (36) an dem äußeren Ende (26) des Abschnitts (12) vorgesehen ist.

26. Verankerung nach Anspruch 25, **dadurch gekennzeichnet, dass** der Schneiddurchmesser des Schneidkopfs (36) im wesentlichen derselbe ist oder geringfügig größer ist als der größte Durchmesser des Körperabschnitts (12).

27. Verankerung nach einem der Ansprüche 4 bis 26, **dadurch gekennzeichnet, dass** ein Durchtritt (22) in dem Körperabschnitt (12) vorgesehen ist, der sich von dem einen Ende (18) erstreckt, um Mittel zum Anbringen eines Gegenstands an einer Montagevorrichtung oder eines an der Montagevorrichtung anzubringenden Gegenstands sicher aufzunehmen.

28. Verankerung nach Anspruch 27, **dadurch gekennzeichnet, dass** sich der Durchtritt (22) im wesentlichen entlang der gesamten Länge des Körperabschnitts (12) von einer Öffnung (20) an dem einen Ende (18) nach unten erstreckt.

29. Verankerung nach Anspruch 28, **dadurch gekennzeichnet, dass** der Durchtritt (22) ein blindes Ende (24) an oder in der Nähe des anderen Endes (26) aufweist.

30. Verankerung nach einem der Ansprüche 27 bis 29, **dadurch gekennzeichnet, dass** der Durchtritt (22) so angeordnet ist, dass er ein Gewinde-Befestigungsmittel, wie z.B. Schrauben oder ähnliche Vorrichtungen mit unterschiedlichem Gewinde-Außendurchmesser aufnehmen kann.

31. Verankerung nach Anspruch 30, **dadurch gekennzeichnet, dass** der Durchtritt (22) so angeordnet ist, dass er Gewinde aufnehmen kann, deren Abmessung in Folge von Fertigungstoleranzen des Mittels schwankt.

32. Verankerung nach Anspruch 30 oder 31, **dadurch gekennzeichnet, dass** der Durchtritt (22) so angeordnet ist, dass er verschiedene Gewindeabmessungen aufnehmen kann, ohne dass es einer merklichen Erhöhung der Drehmomentkräfte bedarf, die auf den Körper übertragen werden.

33. Verankerung nach einem der Ansprüche 27 bis 32, **dadurch gekennzeichnet, dass** der Durchtritt (22) eine Vielzahl von Rippenformationen (37) aufweist, die sich entlang des Durchtritts nach unten erstrecken.

34. Verankerung nach Anspruch 38, **dadurch gekennzeichnet, dass** die Rippenformationen (37) sich entlang der Länge des Durchtritts (22) vorwiegend gleichmäßig beabstandet um den inneren Umfang des Durchtritts (22) herum nach unten erstrecken.

35. Verankerung nach Anspruch 33 oder 34, **dadurch gekennzeichnet, dass** sich die Rippenformationen (37) in den Durchtritt (22) bis zu einem im wesentlichen gleichen Abstand erstrecken.

36. Verankerung nach einem der Ansprüche 33 bis 35, **dadurch gekennzeichnet, dass** die Rippenformationen (37) alle eine ähnliche Ausgestaltung haben.

## Revendications

1. Ancrage (10) pour fixer un objet à un appareil, l'ancrage (10) comprenant une partie de corps (12), des moyens de filetage (16) s'étendant autour de la partie de corps (12) et une région de faiblesse (30) prévue dans une partie intermédiaire le long de la partie de corps (12) de manière à permettre le raccourcissement sélectif de la longueur de l'ancrage (10), **caractérisé en ce que** les moyens de filetage (16) sont affaiblis sur ladite région de faiblesse (30) pour faciliter ledit raccourcissement sélectif.

2. Ancrage selon la revendication 1, **caractérisé en ce que** la faiblesse est suffisante pour permettre la rupture sélective de l'ancrage (10) mais pour résister généralement à la rupture dans la position filetée de l'ancrage (10) dans un appareil.

3. Ancrage selon l'une quelconque des revendications précédentes, **caractérisé en ce que** l'ancrage (10) est affaibli pour rupture sélective dans une position hors de l'appareil, de préférence après que l'ancrage (10) a été utilisé pour percer un trou dans un appareil dans lequel l'ancrage raccourci est destiné à être installé par filetage.

4. Ancrage selon l'une quelconque des revendications précédentes, **caractérisé en ce que** la région de faiblesse (30) est disposée à une distance d'une première extrémité (18) de la partie de corps (12) sensiblement égale à l'épaisseur de l'appareil dans lequel l'ancrage (10) est destiné à être installé.

5. Ancrage selon l'une quelconque des revendications précédentes, **caractérisé en ce que** la région de faiblesse (30) est prévue généralement à mi-chemin sur la longueur de la partie de corps (12).

6. Ancrage selon l'une quelconque des revendications précédentes, **caractérisé en ce que** la faiblesse comprend une rainure ou une telle autre formation s'étendant autour de la partie de corps (12).

7. Ancrage selon l'une quelconque des revendications 4 à 6, **caractérisé en ce que** ladite première extrémité (18) est l'extrémité mise en prise pour définir la position filetée de l'ancrage dans un appareil.

8. Ancrage selon l'une quelconque des revendications 4 à 7, **caractérisé en ce qu'**une partie de tête (28) est disposée sur ladite première extrémité (18), ladite partie de tête (28) ayant un diamètre supérieur à celui de la partie de corps (12).

9. Ancrage selon la revendication 8, **caractérisé en ce que** la partie de tête (28) comprend un moyen ou est formée pour recevoir un outil pour faciliter l'installation filetée de l'ancrage (10).

10. Ancrage selon l'une quelconque des revendications précédentes, **caractérisé en ce qu'**une ou plusieurs formations de fixation (14) s'étendent depuis la partie de corps (12) généralement entre lesdits moyens de filetage (16) pour mettre en prise un appareil dans lequel l'ancrage (10) est installé par filetage de manière à fixer la position de l'ancrage (10) dans l'appareil.

11. Ancrage selon la revendication 10, **caractérisé en ce que** la ou les formation(s) de fixation (14) comprennent un ou plusieurs filetages secondaires s'étendant autour de la partie de corps (12).

12. Ancrage selon la revendication 10 ou la revendication 11, **caractérisé en ce que** les formations de fixation (14) comprennent une pluralité de saillies en position espacée autour de la partie de corps (12).

13. Ancrage selon la revendication 12, **caractérisé en ce que** les formations (14) sont formées de manière à faciliter la mise en prise et la fixation de celles-ci dans un appareil.

14. Ancrage selon la revendication 13, **caractérisé en ce que** les formations (14) sont généralement effilées vers un point dans la direction de la localisation filetée de l'ancrage (10) dans un appareil de manière à faciliter une telle localisation et à résister au retrait généralement en dévissant l'ancrage (10) de l'appareil.

15. Ancrage selon l'une quelconque des revendications 10 à 14, **caractérisé en ce que** la ou les formation(s) (14) s'étendent généralement depuis une première extrémité (18) de la partie de corps (12) seulement sur une partie et, de préférence, approximativement à mi-chemin ou avant sur la longueur de la partie de corps (12).

16. Ancrage selon l'une quelconque des revendications 10 à 15, **caractérisé en ce que** la ou les formation(s) (14) s'étendent depuis la partie de corps (12) jusqu'à une hauteur inférieure à celle des moyens de filetage (16).

17. Ancrage selon l'une quelconque des revendications 10 à 16, **caractérisé en ce que** la ou les formation(s) (14) sont équidistantes entre les moyens de filetage (16).

18. Ancrage selon l'une quelconque des revendications 10 à 17, **caractérisé en ce que** la ou les formation(s) (14) sont plus étroites en section transversale que les moyens de filetage (16).

19. Ancrage selon l'une quelconque des revendications précédentes, **caractérisé en ce que** la partie de corps (12) est formée de manière à assurer que la résistance à l'insertion de l'ancrage (10) dans un appareil soit sensiblement constante ou augmente durant l'insertion de telle manière que les forces retenant l'ancrage (10) soient sensiblement, constantes ou augmentent durant l'insertion.

20. Ancrage selon la revendication 19, **caractérisé en ce que** la partie de corps (12) est effilée depuis la première extrémité (18) le long de sa longueur vers l'autre extrémité (26).

21. Ancrage selon la revendication 19, **caractérisé en ce que** le diamètre de la partie de corps (12) augmente depuis un point intermédiaire le long de la partie de corps (12) vers ladite première extrémité (18) et, de préférence, dans la région entre la région de faiblesse (30) et ladite première extrémité (18) et la section résiduelle de la partie de corps (12) entre la région de faiblesse (30) et l'autre extrémité (26) de la partie de corps (12) étant de diamètre généralement constant.

22. Ancrage selon la revendication 21, **caractérisé en ce que** les moyens de filetage (16) s'étendent depuis ladite région entre la faiblesse et ladite première extrémité (18) dans ladite section de la partie de corps (12).

23. Ancrage selon l'une quelconque des revendications précédentes, **caractérisé en ce que** les moyens de filetage (16) comprennent deux parties discrètes, de chaque côté de la région de faiblesse (30).

24. Ancrage selon l'une quelconque des revendications 4 à 23, **caractérisé en ce que** les moyens de filetage (16) s'étendent depuis un emplacement ou à proximité de ladite première extrémité (18) pour faciliter une localisation rigide dans un appareil relativement mince.

25. Ancrage selon l'une quelconque des revendications 20 à 24, **caractérisé en ce qu'**une tête coupante (36) est prévue à ladite autre extrémité (26) de la partie (12).

26. Ancrage selon la revendication 25, **caractérisé en ce que** le diamètre de coupe de la tête coupante (36) est sensiblement identique ou légèrement supérieur au plus grand diamètre de la partie de corps (12).

27. Ancrage selon l'une quelconque des revendications 4 à 26, **caractérisé en ce qu'**un passage (22) est disposé dans la partie de corps (12) s'étendant depuis ladite première extrémité (18) pour recevoir rigidement des moyens pour attacher un objet ou un objet destiné à être fixé, à un appareil.

28. Ancrage selon la revendication 27, **caractérisé en ce que** le passage (22) s'étend sensiblement dans la longueur de la partie de corps (12) depuis une ouverture (20) à ladite première extrémité (18).

29. Ancrage selon la revendication 28, **caractérisé en ce que** le passage (22) comprend une extrémité aveugle (24) à ou à proximité de ladite autre extrémité (26).

30. Ancrage selon l'une quelconque des revendications 27 à 29, **caractérisé en ce que** le passage (22) est agencé de manière à recevoir des moyens de fixation par filetage tels que des vis ou des dispositifs similaires, avec un diamètre externe de filetage différent.

31. Ancrage selon la revendication 30, **caractérisé en ce que** le passage (22) est agencé de manière à recevoir des filetages variant en taille en conséquence des tolérances de fabrication des moyens.

32. Ancrage selon la revendication 30 ou la revendication 31, **caractérisé en ce que** le passage (22) est agencé de manière à recevoir différentes tailles de filetage sans augmentation significative des forces de couple transférées au corps.

33. Ancrage selon l'une quelconque des revendications 27 à 32, **caractérisé en ce que** le passage (22) comprend une pruralité de formations de nervure (37) s'étendant dans le passage.

34. Ancrage selon la revendication 33, **caractérisé en ce que** les formations de nervure (37) s'étendent sur la longueur du passage (22) en relation généralement équidistante autour de la circonférence interne du passage (22).

35. Ancrage selon la revendication 33 ou la revendication 34, **caractérisé en ce que** les formations de nervure (37) s'étendant dans le passage (22) une distance sensiblement égale.

36. Ancrage selon l'une quelconque des revendications 33 à 35, **caractérisé en ce que** les formations de nervure (37) sont toutes de configuration similaire.
